Europäisches Patentamt

European Patent Office

Office européen des brevets

(11) Veröffentlichungsnummer: **0 490 209 A2**

(12) **EUROPÄISCHE PATENTANMELDUNG**

(21) Anmeldenummer: **91120647.2**

(22) Anmeldetag: **30.11.91**

(51) Int. Cl.⁵: **G03B 15/03**

(30) Priorität: **10.12.90 DE 4039344**

(43) Veröffentlichungstag der Anmeldung:
**17.06.92 Patentblatt 92/25**

(84) Benannte Vertragsstaaten:
**AT CH DE ES FR GB IT LI NL SE**

(71) Anmelder: **Cullmann GmbH**
**Waldstrasse 12**
**W-8506 Langenzenn/Laubendorf(DE)**

(72) Erfinder: **Der Erfinder hat auf seine Nennung**
**verzichtet**

(54) **Fotographisches Beleuchtungsgerät.**

(57) Es wird ein fotografisches Beleuchtungsgerät (10) mit einem eine Lichtaustrittsöffnung (14) ausweisenden Gehäuse und mit einer Scheibe (26) aus transparentem Material, die in der Lichtaustrittsöffnung (14) in einem Abstand vor einer Lichtquelle (20) angeordnet ist, beschrieben, wobei die Scheibe (26) an mindestens einer ihrer beiden Hauptflächen (28,30) mit Erhebungen (32;34) bzw. Vertiefungen (36;38) derart als Streulichtscheibe ausgebildet ist, dass ein zur Scheibe (26) paralleles Beleuchtungsfeld eine rechteckige bzw. quadratische Randkontur aufweist.

FIG.1

Die Erfindung betrifft ein fotografisches Beleuchtungsgerät, insbesondere Leuchte für ein Foto-, Film- oder Videogerät, mit einem eine Lichtaustrittsöffnung aufweisenden Gehäuse und mit einer Scheibe aus transparentem Material, die in der Lichtaustrittsöffnung in einem Abstand von einer Lichtquelle angeordnet ist.

Die Lichtquelle eines derartigen Beleuchtungsgerätes weist eine bestimmte räumliche Strahlungscharakteristik auf, so dass die in einem Abstand vor der Lichtquelle angeordnete Scheibe in der Lichtaustrittsöffnung des Gehäuses des Beleuchtungsgerätes entsprechend der Strahlungscharakteristik der Lichtquelle angestrahlt und durchstrahlt wird. Es ergibt sich folglich an der Scheibe aus transparentem Material eine Leuchtdichte-Verteilung entsprechend der Strahlungscharakteristik der Lichtquelle, d. h. eine nicht konstante Verteilung der Leuchtdichte. Im Zentrum der Scheibe ist die Leuchtdichte üblicherweise grösser als am umlaufenden Randabschnitt der Scheibe, weil das Zentrum der Scheibe von der Lichtquelle einen geringeren Abstand aufweist als der umlaufende Randabschnitt. Ausserdem ergibt sich mit den bekannten Beleuchtungseinrichtungen der eingangs genannten Art ein ausgeleuchtetes Beleuchtungsfeld mit einer runden Umfangskontur, wenn das Beleuchtungsfeld zur Scheibe parallel orientiert ist. Nachdem das Blickfeld eines Photo-, Film- oder Videogerätes entsprechend dem Bildformat des Gerätes jedoch rechteckig oder quadratisch ist, ergibt sich bislang eine Bildfeldausleuchtung, die mit dem Bildformat nicht übereinstimmt.

Der Erfindung liegt die Aufgabe zugrunde, ein fotografisches Beleuchtungsgerät der eingangs genannten Art zu schaffen, bei welchem die Bildfeldausleuchtung mit dem Bildformat eines Photo-, Film- oder Videogerätes mindestens näherungsweise übereinstimmt.

Diese Aufgabe wird erfindungsgemäss dadurch gelöst, dass die Scheibe an mindestens einer ihrer beiden Hauptflächen mit Erhebungen bzw. Vertiefungen derart als Streulichtscheibe ausgebildet ist, dass ein zur Scheibe mindestens annähernd parallel orientiertes Beleuchtungsfeld eine mindestens annähernd rechteckige bzw. quadratische Randkontur aufweist. Dabei können die Erhebungen beispielsweise als voneinander beabstandete in einem geordneten Rastergitter vorgesehene Noppen ausgebildet sein. Zweckmässig ist es jedoch, wenn die Scheibe an mindestens eine ihrer beiden Hauptflächen mit zueinander parallel verlaufenden und voneinander beabstandeten länglichen Erhebungen bzw. Vertiefungen ausgebildet ist.

Eine derartig ausgebildete Scheibe weist also mindestens eine mit entsprechenden Längswellenbergen und -tälern ausgebildete Hauptfläche auf, wodurch das die Scheibe durchdringende Licht in der entsprechenden Raumrichtung gebündelt wird. Auf diese Weise ist eine gezielte Abweichung der Randkontur des Beleuchtungsfeldes von einem kreisförmigen Beleuchtungsfeld erzielbar.

Eine gute Annäherung an ein rechteckiges bzw. quadratisches Beleuchtungsfeld wird erzielt, wenn die Scheibe an jeder ihrer beiden voneinander abgewandten Hauptflächen jeweils mit zueinander parallel verlaufenden und voneinander beabstandeten länglichen Erhebungen bzw. Vertiefungen ausgebildet ist, wobei die Erhebungen bzw. Vertiefungen der einen Hauptfläche sich mit den Erhebungen bzw. Vertiefungen der anderen Hauptfläche unter einem bestimmten Winkel kreuzen. Eine solche Scheibe ist relativ einfach in einem vergleichsweise einfach herstellbar. Durch die sich überkreuzenden wellenförmigen Erhebungen bzw. Vertiefungen der beiden Scheiben-Hauptflächen ergibt sich eine Lichtbündelung in zwei voneinander verschiedenen Raumrichtungen und folglich auf einer zur Scheibe parallelen Fläche ein Beleuchtungsfeld mit einer entsprechenden viereckigen Umfangsrandkontur. Gleichzeitig wird in vorteilhafter Weise eine gute Vergleichmässigung der Leuchtdichte über die gesamte Flächenausdehnung des Beleuchtungsfeldes erzielt.

Als besonders vorteilhaft hat es sich erwiesen, wenn sich die Erhebungen bzw. Vertiefungen der einen Hauptfläche mit den Erhebungen bzw. Vertiefungen der anderen Hauptfläche der Scheibe rechtwinkelig kreuzen, weil sich dann eine gute Annäherung an ein rechteckiges bzw. quadratisches Beleuchtungsfeld ergibt.

Die Erhebungen bzw. die Vertiefungen sind vorzugsweise voneinander äquidistant beabstandet. Hierbei ist es möglich, dass die Erhebungen bzw. Vertiefungen der einen Hauptfläche und die Erhebungen bzw. Vertiefungen der anderen Hauptfläche der Scheibe den selben Abstand besitzen. In diesem Fall ergibt sich ein quadratisches Beleuchtungsfeld. Die Erhebungen bzw. Vertiefungen der einen Hauptfläche können jedoch voneinander auch einen Abstand aufweisen, der vom Abstand der Erhebungen bzw. Vertiefungen der anderen Hauptfläche verschieden ist. Auf diese Weise ergibt sich ein rechteckiges Beleuchtungsfeld.

Weitere Einzelheiten, Merkmale und Vorteile ergeben sich aus der nachfolgenden Beschreibung eines in der Zeichnung dargestellten Ausführungsbeispieles des erfindungsgemässen fotografischen Beleuchtungsgerätes bzw. einer bei diesem Beleuchtungsgerät angewandten Streulichtscheibe. Es zeigt:

Fig. 1 eine teilweise aufgeschnitte Seitenansicht des Beleuchtungsgerätes, bei welchem es sich um eine Leuchte für ein Foto-, Film- oder Videogerät handelt,

Fig. 2 eine Vorderansicht der bei einem Beleuchtungsgerät gemäss Fig 1 zum Einsatz gelangenden Scheibe,

Fig. 3 eine Ansicht der Scheibe gemäss Fig. 2 in Blickrichtung des Pfeiles III,

Fig. 4 eine Seitenansicht der Scheibe gemäss Fig. 2 in Blickrichtung des Pfeiles IV,

Fig. 5 eine Darstellung des Details V in Fig. 3 in einem stark vergrössertem Maßstab, und

Fig. 6 eine Darstellung des Details VI in Fig. 4 in einem der Fig. 5 entsprechenden Maßstab.

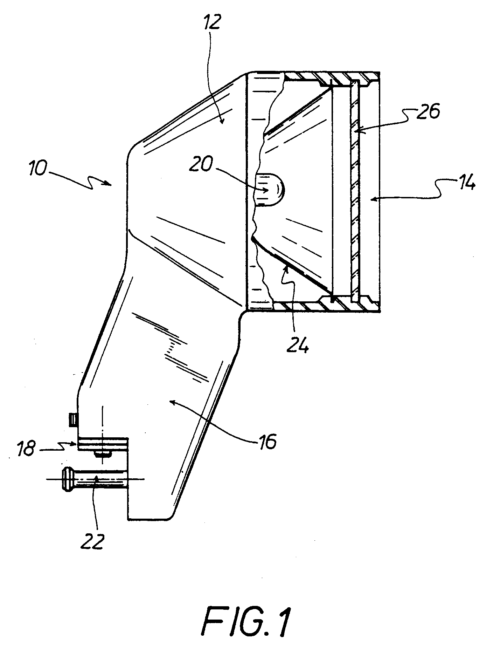

Figur 1 zeigt teilweise aufgeschnitten in einer Seitenansicht ein fotografisches Beleuchtungsgerät 10, bei dem es sich insbesondere um eine Leuchte für ein Foto-, Film- oder Videogerät oder dergleichen handelt. Das Beleuchtungsgerät 10 weist ein Gehäuse 12 mit einer Lichtaustrittsöffnung 14 auf. Das Gehäuse 12 ist beispielsweise mit einem Fussteil 16 ausgebildet, das mit einem genormten Steckfuss 18 für eine Kameraschiene oder dergleichen versehen ist. Im Fussteil 16 kann eine Energiequelle zum Beispiel in Form einer wiederaufladbaren Batterie oder eines Akkumulators angeordnet sein, um dies im Gehäuse 12 angeordnete Lichtquelle 20 mit Energie zu versorgen. In Figur 1 ist eine Ausbildung des Beleuchtungsgerätes 10 dargestellt, bei welcher die Lichtquelle 20 über ein vom Fussteil 16 wegstehendes Kontaktteil 22 mit einer externen Energiequelle verbindbar ist,

Im Gehäuse 12 des Beleuchtungsgerätes 10 ist eine Reflektor 24 angeordnet, der dazu vorgesehen ist, das Licht von der Lichtquelle 20 zur Lichtaustrittsöffnung 14 zu lenken. In der Lichtaustrittsöffnung 14 ist eine Scheibe 26 aus transparentem Material angeordnet, die von der Lichtquelle 20 beabstandet ist.

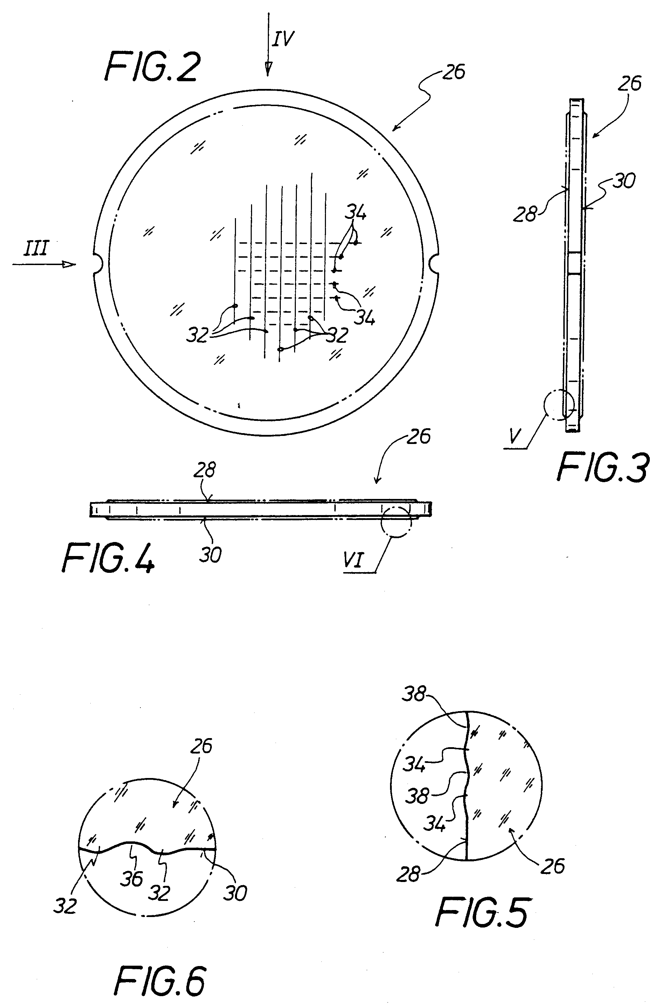

Um mit dem Beleuchtungsgerät 10 ein Beleuchtungsfeld mit einer rechteckigen oder quadratischen Umfangsrandkontur zu erzielen, ist die Scheibe 26 - wie nachfolgend unter Bezugnahme auf die Figuren 2 bis 6 ausführlicher erläutert wird - mit Erhebungen bzw. Vertiefungen ausgebildet. In Figur 2 sind einige der Erhebungen als längliche Linien 32 angedeutet. Mit unterbrochenen Linien 34 sind die Erhebungen auf der anderen Seite der Scheibe 26 angedeutet. Die Erhebungen 32 auf der einen Hauptfläche 30 erstrecken sich von einem zum anderen Rand der Scheibe 26, sie verlaufen zueinander parallel geradlinig und weisen voneinander einen bestimmten Abstand auf. Dadurch ergibt sich eine Bündelung des die Scheibe 26 durchdringenden Lichtes in einer Raumrichtung. Die auf der anderen Hauptfläche 28 der Scheibe 26 vorgesehenen Erhebungen 34 verlaufen ebenfalls von einem zum gegenüberliegenden Rand der Scheibe 26 geradlinig und weisen voneinander einen konstanten Abstand auf. Durch diese Erhebungen und Vertiefungen wird das Licht in einer zweiten Raumrichtung gebündelt. Die Erhebungen 32 auf der einen Hauptfläche 30 der Scheibe 26 und die Erhebungen 34 auf der anderen Hauptfläche 28 der Scheibe 26 überkreuzen sich rechtwinkelig, wie aus Figur 2 zu ersehen ist, so dass sich insgesamt ein Beleuchtungsfeld mit einer rechteckigen oder quadratischen Umfangsrandkontur ergibt. Zwei der Erhebungen 32 an der Hauptfläche 30 der Scheibe 26 sind in Figur 6 in einem stark vergrösserten Maßstab dargestellt, aus dieser Figur ist auch eine Vertiefung 36 zwischen benachbarten Erhebungen 32 ersichtlich. Die Erhebungen 32 und Vertiefungen 36 bilden also an der Hauptfläche 30 der Scheibe 26 ein geradliniges Wellenmuster. Aus Figur 5 sind zwei Erhebungen 34 an der Hauptfläche 28 der Scheibe 26 sowie zwischen benachbarten Erhebungen 34 vorgesehene Vertiefungen 38 verdeutlicht.

**Patentansprüche**

1. Fotografisches Beleuchtungsgerät, insbesondere Leuchte für ein Foto-, Film- oder Videogerät, mit einem eine Lichtaustrittsöffnung (14) aufweisenden Gehäuse (12) und mit einer Scheibe (26) aus transparentem Material, die in der Lichtaustrittsöffnung (14) in einem Abstand vor einer Lichtquelle (20) angeordnet ist, **dadurch gekennzeichnet,** dass die Scheibe (26) an mindestens einer ihrer beiden Hauptflächen (28,30) derart mit Erhebungen (32;34) bzw. Vertiefungen (36;38) als Streulichtscheibe ausgebildet ist, dass ein zur Scheibe (26) zumindest annähernd parallel orientiertes Beleuchtungsfeld eine mindestens annähernd rechteckige bzw. quadratische Randkontur aufweist.

2. Gerät nach Anspruch 1, **dadurch gekennzeichnet,** dass die Scheibe (26) an mindestens einer ihrer beiden Hauptflächen (28,30) mit zueinander parallel verlaufenden und voneinander beabstandeten länglichen Erhebungen (32;34) bzw. Vertiefungen (36;38) ausgebildet ist.

3. Gerät nach Anspruch 2, **dadurch gekennzeichnet,** dass die Scheibe (26) an jeder ihrer beiden voneinander abgewandten Hauptflächen (26,28) jeweils mit zueinander parallel verlaufenden und voneinander beabstandeten länglichen Erhebungen (32;34) bzw. Vertiefungen (36;38) ausgebildet ist, wobei die Erhebungen (32) bzw. Vertiefungen (36) der einen Hauptfläche (30) sich mit den Erhebungen (34) bzw.

Vertiefungen (38) der anderen Hauptfläche (28) unter einem bestimmten Winkel kreuzen.

4. Gerät nach Anspruch 3,
   **dadurch gekennzeichnet**,
   dass die Erhebungen (32) bzw. Vertiefungen (36) der einen Hauptfläche (30) sich mit den Erhebungen (34) bzw. Vertiefungen (38) der anderen Hauptfläche (28) der Scheibe (26) rechtwinkelig kreuzen.

5. Gerät nach einem der vorhergehenden Ansprüche,
   **dadurch gekennzeichnet**,
   dass die Erhebungen (32;34) bzw. Vertiefungen (36;38) voneinander äquidistant beabstandet sind.

6. Gerät nach Anspruch 5,
   **dadurch gekennzeichnet**,
   dass die Erhebungen (32) bzw. Vertiefungen (36) der einen Hauptfläche (30) voneinander einen Abstand aufweisen, der vom Abstand der Erhebungen (34) bzw. Vertiefungen (38) der anderen Hauptfläche (28) verschieden ist.

FIG.1

FIG.2

IV

26

III

34

34

32

32

26

28

30

V

FIG.3

28

26

30

VI

FIG.4

26

32

36

32

30

FIG.6

38

34

38

34

28

26

FIG.5